# EUROPEAN PATENT APPLICATION

(11) **EP 1 715 335 A1**
(43) Date of publication of application: **25.10.2006**
(21) Application number: 06008207.0
(22) Date of filing: 20.04.2006
(51) Int. Cl.: G01N 27/90, G01B 5/00, B65G 47/28

(54) **Workpiece inspection system**

(30) Priority: 22.04.2005 US 112446
(71) Applicant: MECTRON ENGINEERING COMPANY, Saline, MI 48176 (US)
(72) Inventor: Hanna, James L., Saline Michigan 48176 (US)
(74) Representative: Solf, Alexander

(57) **Abstract**

An inspection station for a workpiece including a conveyor, a mechanism for rotating the workpiece, and a probe. The conveyor includes a fixture for locating the workpiece and the conveyor is configured to translate the workpiece in a linear manner. A mechanism, such as a belt, engages the workpiece thereby rotating the workpiece within the fixture. The probe is configured to indicate if the workpiece conforms to quality criteria. To facilitate inspection while the conveyor translates the workpiece, the probe is attached to a stage where the stage is configured to move the probe synchronously with the workpiece over an inspection region.

## Description

### FIELD OF THE INVENTION

This invention relates to a device for inspecting components and particularly to one using a probe that translates synchronously with the component over an inspection region.

### BACKGROUND OF THE INVENTION

Presently, there is an ever increasing demand to obtain high quality products which has resulted in a significant increase in the use of inspection systems. In order for a complex machine to operate as designed, it is necessary that all of its sub-components comply with quality criteria. In some manufacturing settings, customers require 100% inspection of component parts. For example, fasteners used in the automobile industry and elsewhere often must be individually inspected to determine if they meet product specifications.

When producing fasteners, the process often begins with wire stock which is fed into a cold heading or screw type forming machine. The part is die-formed or cut in a machine into a shape that may include several diameters and possibly a threaded or knurled length. The formed part may require secondary operations such as thread rolling, heat treating, plating etc. It is not uncommon for one or more of the processes to produce a crack in the part or other defect. The occurrence of such defects is often not adequately monitored through random part selection or other quality assurance processes which do not provide 100% inspection. The inspection system of this invention is also highly adaptable for evaluating various components.

A variety of non-contact inspection systems are known using a variety of inspection techniques. For example, eddy current inspection systems examine the electromagnetic field transmitted through a part as a means of characterizing cracks in the part. Various systems based on a video image of a part are also known. In addition, laser gauging systems are used for obtaining specific dimensional measurements.

Although known inspection systems are generally useful, they have certain limitations. Many of the presently available non-contact gauging systems require complex data processing approaches which impose expensive hardware requirements and can limit the speed with which evaluations can be accomplished. Further, many inspection stations either require multiple sensors to inspect the full circumference of the part or include a station where the part is stopped and indexed into special tooling that manipulates the part to present the entire circumference to a sensor for inspection. Preferably, evaluation of a component can be conducted in a rapid enough fashion that the parts can be directly sorted into qualified or disqualified part streams. Many of these prior art systems also tend not to be easily adapted to various part configurations. Moreover, many prior art systems, although performing adequately in a laboratory setting, are not sufficiently rugged for a production environment where temperature variations, dust, dirt, cutting fluids, etc. are encountered.

In view of the above, it is apparent that there exists a need for an improved inspection system for workpieces.

### SUMMARY

In satisfying the above need, as well as overcoming the enumerated drawbacks and other limitations of the rotated art, the present invention provides an improved inspection system for workpieces.

In accordance with the present invention, an embodiment of an improved inspection system is provided which enables rapid inspection to be conducted permitting parts to be immediately sorted in terms of being in conformance or out of conformance with quality specifications. The parts move from a hopper by gravity or other means along a track to a conveyor. The conveyor has an array of fixtures for locating the parts on the conveyor. Further, a belt extends along the conveyor and engages the parts causing them to rotate within the fixture. One or more probes are used to inspect the parts as they are translated and rotated along the conveyor.

In one aspect of the present invention, the probe is an eddy current sensor that generates a magnetic field to sense cracks in the part. In another aspect of the present invention, the probe inspects the formation of a recess in the part. The probe includes a tool that engages the recess and the depth of translation into the recess is measured to determine if the recess is properly formed. In addition, the system includes a stage where the probe is attached to the stage and the stage is configured to translate synchronously with the part as the part is translated by the conveyor. The stage includes a mechanism to engage the conveyor thereby translating the probe in alignment with the part and allowing inspection of the part by the probe. Preferably, the mechanism of the stage engages the conveyor for at least one full rotation of the part to facilitate inspection.

Further objects, features and advantages of this invention will become readily apparent to persons skilled in the art after a review of the following description, with reference to the drawings and claims that are appended to and form a part of this specification.

### BRIEF DESCRIPTION OF THE DRAWINGS

FIG. 1 is an isometric view of an inspection system in accordance with the present invention;

FIG. 2 is an isometric view showing an inspection station in accordance with the present invention;

FIG. 3 is a top view of the conveyor and inspection station in accordance with the present invention;

FIG. 4 is an isometric view of an inspection assembly in accordance with the present invention; and

FIG. 5 is another isometric view of an inspection assembly in accordance with the present invention.

### DETAILED DESCRIPTION

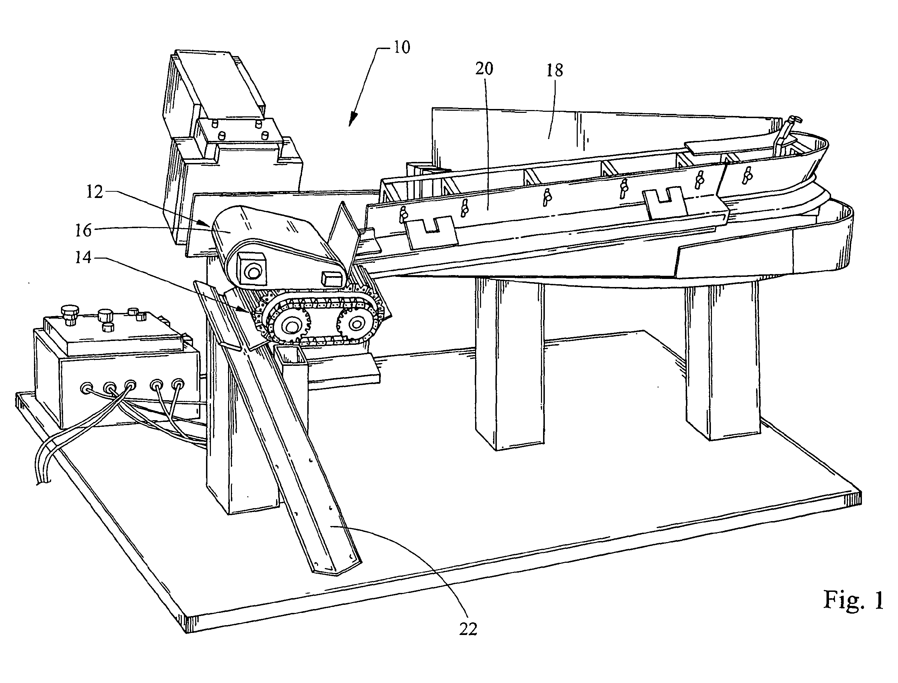

Referring now to Figure 1, a system embodying the principles of the present invention is illustrated therein and designated at 10. As its primary components, the system 10 includes an inspection station 12 that uses a linear conveyor 14 to translate parts while a belt drive 16 rotates the parts relative to the conveyor 14.

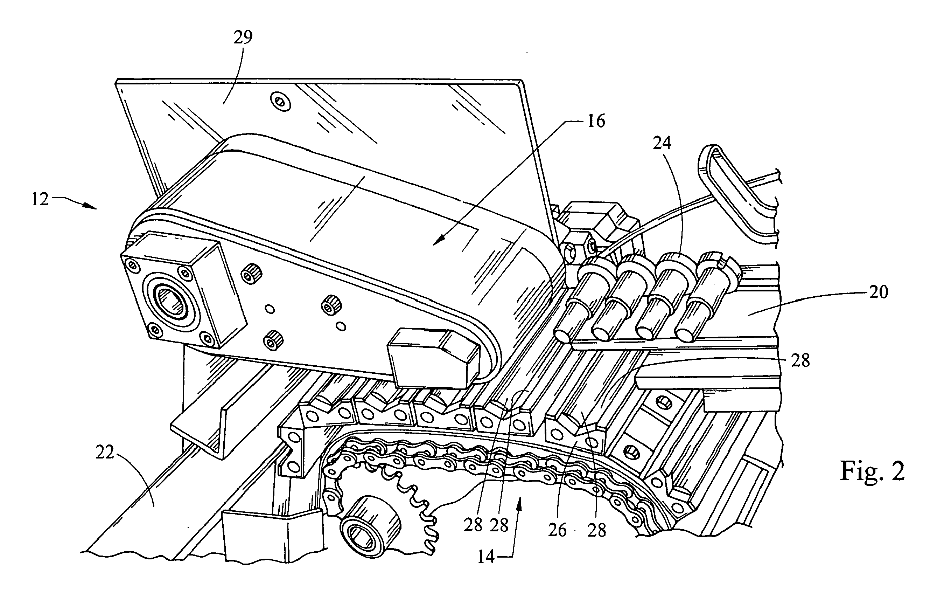

The parts are provided from a hopper 18 along a track 20. The parts translate along the track 20 due to gravity, vibration, or other means reaching the inspection station 12. Parts 24 are located in the inspection station 12 by an array of fixtures 26 forming part of the conveyor 14, as shown in Figure 2. The belt drive 16 moves at a speed different than the speed of the conveyor 14. For example, the belt drive 16 may move in the same direction as the conveyor 14 but at a slightly faster speed. Alternatively, the belt drive 16 may move slower than the conveyor 14 or even in the opposite direction. Another embodiment may include a stationary pad that frictionally engages the parts 24.

Referring again to Figure 2, the belt drive 16 frictionally engages the parts 24 located on the conveyor 14. The frictional engagement causes the parts 24 to rotate as they are translated linearly by the conveyor 14 in the fixtures 26. To facilitate rotation of the parts 24, the fixtures 26 include rollers 28 that provide positive mechanical location of the parts 24 parallel to the direction of conveyor translation while allowing rotation.

Further, the parts 24 have a head with a diameter that is larger than the diameter of the body of the parts 24. The fixtures 26 have a surface that locates the parts 24 in a direction perpendicular to the direction of conveyor translation. In the embodiment shown, the fixtures 26 are positioned at an angle relative to gravity such that the head of the parts 24 will self locate against a surface of the fixture 26 due to gravity thereby locating the parts 24 in a direction perpendicular to the direction of conveyor translation. A guide such as a rail may also be used to positively locate the parts 24 in a direction perpendicular to the direction of conveyor translation. The parts 24 fall off the end of the conveyor 14 into a chute 22 that sorts conforming from non-conforming parts.

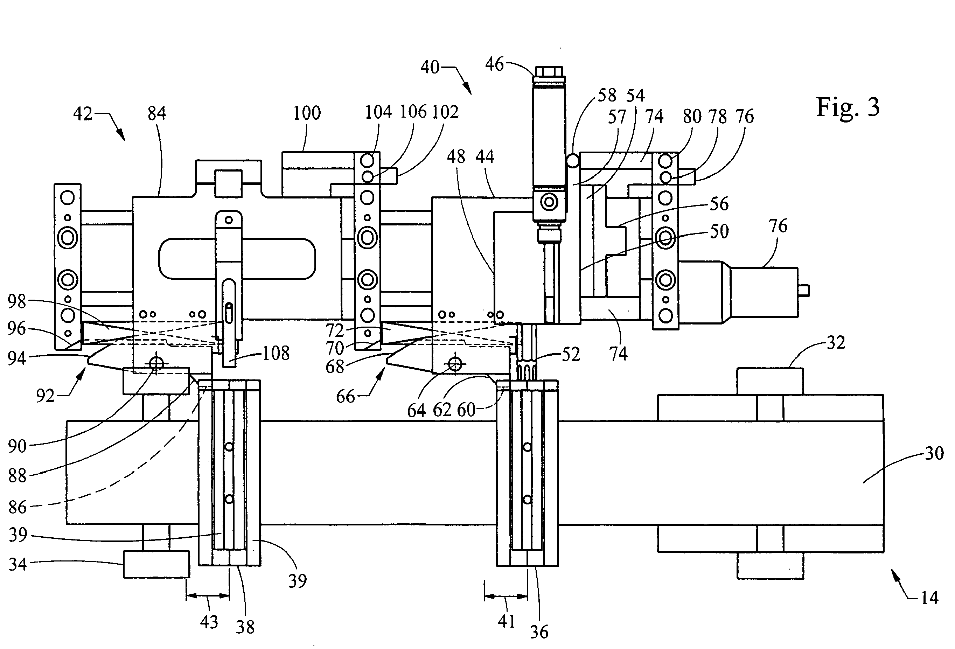

Now referring to Figure 3, a first and second inspection assembly 40, 42 are illustrated in accordance with the present invention. The first inspection assembly 40 includes a stage 44 and a probe 45. The first inspection assembly 40 is configured to inspect a recess in the part as the conveyor 14 translates the part 24 through an inspection region 41. The conveyor 14 includes a belt 30 that rotates around a first pulley 32 and a second pulley 34. Although a belt 30 is shown, a chain or other conveyor may be readily used. Attached to the belt 30 is an array of fixtures for holding parts. Fixture 36 is aligned with the first inspection assembly 40 at the start of the inspection region 41 while fixture 38 is aligned with the second inspection assembly 42 at the start of inspection region 43.

The stage 44 of the first inspection assembly 40 is configured to engage the conveyor 14 such that the stage 44 moves synchronously and in alignment with fixture 36 allowing inspection of the part as the fixture 36 translates through inspection region 41. The probe 45 includes a tool 52 configured to engage a recess in the part. The tool 52 may be readily changed and adapted for different parts. For example, the tool 52 may take the form of a torx head, a hex head, or any other commonly used tool for driving a fastener.

A slide cylinder 46 is attached to the tool 52 through a spindle assembly 48. The tool 52, spindle assembly 48, and slide cylinder 46 are attached to the stage 44 through a slide 50. The slide 50 allows motion perpendicular to the travel of the conveyor 14 and slide 44. Therefore, the slide 50 enables the tool 52 to be advanced toward the part while the tool 52, spindle assembly 48, and slide cylinder 46 are being translated synchronously and in alignment with the part and fixture 36.

The slide cylinder 46 is configured to advance the tool 52 causing it to engage the recess in the part as the part translates through the inspection region 41. Further, slide cylinder 46 retracts the tool 52 from the part when the part exists the inspection region 41 allowing the stage 44 to translate back to the start of the inspection region 41 to inspect the next part. Alternatively, the tool 52 may be advanced using a cam mechanism configured to translate the tool 52 toward the part based on the linear movement of the slide 44.

The translation of the tool 52 into the recess of the part corresponds to the translation of an indicator 57 that is attached to the tool 52 or spindle assembly 48. Accordingly, translation of the indicator 57 is measured by a sensor 58. The sensor 58 may be a simple switch, such as a photo switch to indicate whether or not the tool has translated an acceptable distance. Alternatively, the sensor 58 may be configured to measure the amount of translation of the indicator 57, such as a linear transducer. To axially align the tool 52 with the part, an angle adjustment plate 54 is provided to adjust the rotation of the spindle assembly 48 and tool 52. Similarly, a vertical adjustment plate 56 is provided to translate the tool 52 relative to the stage 44.

To allow inspection while the conveyor 14 is translating the part through the inspection region 41, the slide 44 mechanically engages the conveyor 14 allowing the stage to synchronously translate in alignment with the part and fixture 36 through the inspection region 41. To facilitate engagement, a notch 60 is provided in the fixture 36. A dog 62 attached to the stage 44 is biased into engagement with the notch 60 as the fixture 36 approaches the inspection region 41. Further, to signal the beginning of the inspection region 41, a position flag 74 is configured to trigger photo switch 80 that signals a controller that the fixture 36 is at the beginning of the inspection region 41. The signal also indicates that sensor 58 may be monitored to determine whether the tool 52 has translated into the recess of the part an acceptable distance. Similarly, a second flag 76 triggers photo switch 78 when the fixture 36 translates to the end of the inspection region 41 signaling the controller that the end of the inspection region has been reached.

In addition, a pawl 66 is provided with a cam surface 68 that is configured to engage a release surface 70. As the stage 44 translates through the end of the inspection region 41, the cam surface 68 engages the release surface 70 rotating the pawl 66 about pivot 64. As the pawl 66 rotates, the dog 62 is withdrawn from the notch 60 of the fixture 36. As the slide 44 disengages the conveyor 14, a biasing member 72, such as a spring, translates the slide 44 to the beginning of the inspection region 41 where the next part may be inspected. In addition, a shock absorber 76 may be provided to reduce wear on the slide 44 and the probe 45.

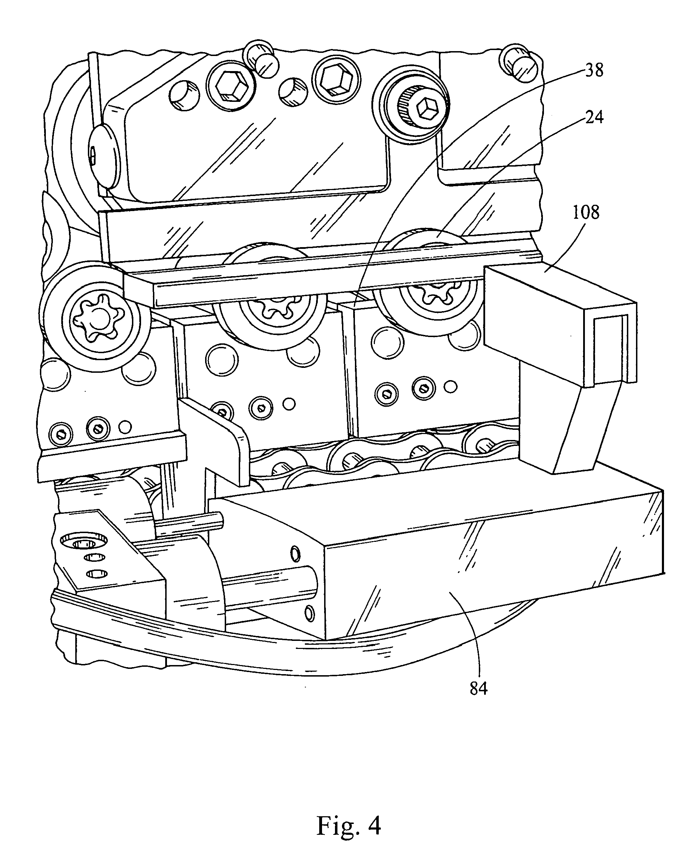

Now referring to the second inspection assembly 42, slide 84 engages the track 14 to align probe 108 with the part and fixture 38 as fixture 38 travels through the inspection region 43, as shown in Figure 4. The probe 108 may be an eddy current sensor configured to generate a magnetic field to detect cracks in the part, for example cracks in the head of a fastener. Preferably, the part interacts with the belt 16 such that the part rotates at least one full circumference through the inspection region 43. As the part is rotated so that the cracked surface of the part is exposed to the probe 108, the magnetic field is disturbed allowing the crack to be detected. The probe 108 is mounted on a stage 84. The stage 84 is configured to engage the conveyor 14 such that the stage moves synchronously and in alignment with fixture 38 allowing inspection of the part as fixture 38 translates through inspection region 43.

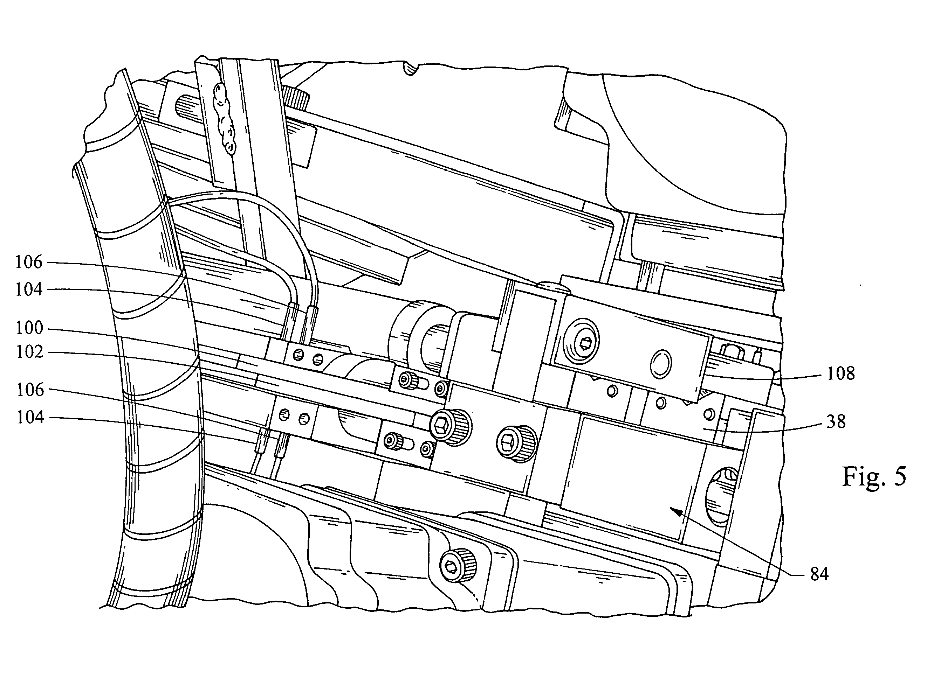

Referring again to Figure 3, the slide mechanically engages the conveyor 14 allowing the stage to synchronously translate in alignment with fixture 38. To facilitate engagement, a notch 86 is provided in the fixture 38. A dog 88 attached to the stage 84 is biased into engagement with the notch 86 as the fixture 38 approaches the inspection region 43. Further, to signal the beginning of the inspection region 43, a position flag 100 is configured to trigger photo switch 104 that signals a controller that the fixture 38 is at the beginning of the inspection region 43 and that probe 108 may be monitored to determine whether a crack is present in the part. Similarly, a second flag 102 triggers photo switch 106 when the fixture 38 translates to the end of the inspection region 43 signaling the controller that the end of the inspection region has been reached. An isometric view of the stage 84 and flags 100, 102 is provided in Figure 5.

In addition, a pawl 82 is provided with a cam surface 94 that is configured to engage a release surface 96. As the stage 84 translates through the end of the inspection region 43, the cam surface 94 engages the release surface 96 rotating the pawl 92 about pivot 90. As the pawl 92 rotates the dog 88 is withdrawn from the notch 86 of the fixture 38. As the slide 84 disengages the conveyor 14 a biasing member 98, such as a spring, translates the slide 84 to the beginning of the inspection region 43 where the next part may be inspected.

Further, it is also envisioned that multiple probes may be attached to the same slide. For example, the probe 108 of the second inspection assembly may be attached to slide 44 along with probe 45. Accordingly, probe 45 and probe 108 would operate on two parts located in adjacent fixtures.

As a person skilled in the art will readily appreciate, the above description is meant as an illustration of implementation of the principles this invention. This description is not intended to limit the scope or application of this invention in that the invention is susceptible to modification, variation and change, without departing from the spirit of this invention, as defined in the following claims.

## Claims

1. An inspection for a workpiece, the inspection station comprising:
a conveyor with a fixture for locating the workpiece, the conveyor being configured to translate the workpiece in a linear manner;
a mechanism that frictionally engages the workpiece thereby rotating the workpiece within the fixture;
a probe configured to indicate if the workpiece conforms to quality criteria, the probe being attached to a stage wherein the stage is configured to move the probe synchronously with the workpiece over an inspection region.

2. The inspection station according to claim 1, wherein the mechanism for engaging the workpiece is a belt drive.

3. The inspection station according to claim 1, further comprising a first switch, wherein the inspection region has a start and an end, the first switch corresponding to the start of the inspection region.

4. The inspection station according to claim 3, further comprising a second switch corresponding to the end of the inspection region.

5. The inspection station according to claim 4, wherein the first and second switch include a photo switch.

6. The inspection station according to claim 1, wherein the stage mechanically engages the conveyor as the workpiece translates through the inspection region.

7. The inspection station according to claim 6, wherein the stage disengages the conveyor when the workpiece reaches the end of the inspection region.

8. The inspection station according to claim 7, wherein the stage is biased to translate toward the start of the inspection region when the stage disengages the conveyor.

9. The inspection station according to claim 1, wherein the probe is an eddy current sensor configured to detect cracks in the workpiece.

10. The inspection station according to claim 1, wherein the mechanism for engaging the workpiece is configured to rotate the workpiece through at least one revolution between a start and an end of the inspection region.

11. The inspection station according to claim 1, wherein the workpiece has a recess and the probe is configured to measure the depth of the recess.

12. The inspection station according to claim 11, wherein the probe includes a tool configured to engage the recess in the workpiece, further comprising a sensor being configured to measure the depth of the recess by measuring the translation of the tool into the recess.

13. The inspection station according to claim 1, wherein the fixture includes at least two rollers that locate the workpiece.
